Europäisches Patentamt

European Patent Office

Office européen des brevets

(11) Publication number: **0 139 052**
**A1**

## (12) EUROPEAN PATENT APPLICATION

(21) Application number: **83306352.2**

(22) Date of filing: **19.10.83**

(51) Int. Cl.⁴: **A 61 C 8/00**

(43) Date of publication of application:
**02.05.85** Bulletin **85/18**

(84) Designated Contracting States:
**DE FR GB SE**

(71) Applicant: **Mozsary, Peter Gabriel**
**630 Tennessee Avenue**
**Vallego California 94590(US)**

(71) Applicant: **Lapcevic, Robert Errol**
**40, North Victoria Avenue**
**Milpitas California 95035(US)**

(72) Inventor: **Mozsary, Peter Gabriel**
**630 Tennessee Avenue**
**Vallego California 94590(US)**

(72) Inventor: **Lapcevic, Robert Errol**
**40, North Victoria Avenue**
**Milpitas California 95035(US)**

(74) Representative: **Daunton, Derek**
**Barlow, Gillett & Percival 94, Market Street**
**Manchester M1 1PJ(GB)**

(54) **Osseointerfaced implanted artificial tooth.**

(57) An artificial tooth (10) is implantable in a jaw bone (26) by means of a tooth root (12) having distal and proximal end portions (28, 24). The distal end portion (28) of the root (12) extends into the jaw bone (26) and is fixed to the jaw bone (26). A hollow (18) extends from the proximal end portion (24) of the root which is accessible from the outer surface of the jaw bone, toward the distal end portion (28) of the root. A post (44) has a first end portion (46) which extends into the hollow (18) of the root (12) and is fixed to the root. A second portion (48) of the post (44) extends outwardly from the hollow (18) and has an outer surface (50) which slopes downwardly toward the first portion (46) of the post. A weakened portion (62) is provided in said second portion such that any excess lateral or shear forces will cause breakage thereof and thereby protect the root (12) in the jaw bone (26). A crown (70) is connected to the second portion (48) of the post.

EP 0 139 052 A1

./...

FIG.__1.

## OSSEOINTERFACED IMPLANTED ARTIFICIAL TOOTH

The present invention relates to a novel osseointerfaced implanted artificial tooth which provides a permanent replacement for a natural tooth. In the past, many systems have been proposed for the implantation of artificial teeth. For example, diverse designs with screws, nails, blades, and the like which are loaded immediately upon insertion in the jaw bone. These implants generally result in scar formation around the implant with insufficient gingival seal, causing chronic infection, bone loss, and the eventual removal of the implant itself. For example, United States Patents 2,857,670 and 3,579,831 describe these systems.

Later designs, such as that shown by United States Patent 3,589,011 describe a two stage implant where a shank, or hollow pin, is used as the root of the artificial tooth. A superstructure is then attached to the shank by utilizing the hollow herewithin to support the super structure, including the crown of the artificial tooth thereabove. United States Patents 3,797,113; 3,979,828; 4,178,686; 4,195,409; 4,259, 072; 4,270,905; and 4,324,550 describe this type of system. The root portion in many cases becomes resorbable which eventually weakens the implant necessitating removal. Many materials such as polymethylmethacrylate eventually cause tissue necrosis and scar formation.

United States Patents 4,215,986 and 4,318,696 describe implants which address the problem of protecting destruction of the artificial tooth by the masticatory forces that overload. It has been found that adjacent natural teeth have also been damaged by this type of implant, causing the breakdown of tissue supporting the natural tooth. An artificial implant system which overcomes the disadvantages of the prior art hereinabove described would be an extremely useful advance in the dental field.

Accordingly, the present invention provides an artificial tooth implantable in a jaw bone comprising;

ED161083                        - 3 -

a. an implantable tooth root, said root having a distal
end portion intended for extending into the jaw bone
and a proximal end portion being accessible from the
outer surface of the jaw bone;  said root further includ-
ing a hollow extending from said proximal end portion
of said root toward said distal end portion of said root;

b. means for fixing said root to the jaw bone;

c. a post, said post having a first portion fitting
within said hollow of said root and a second portion
extending outwardly from said hollow; said second portion
having an outer surface which slopes downwardly toward
said first portion of said post said second portion of
said post further including a base connected to said
first portion of said post; a stem extending from said
base; and a weakened portion at said connection between
said base and stem for breakably connecting said base
to said stem;

d. means for fixing said first portion of said post
within said hollow of said root; and e. a crown connected to said post.


The novel and useful osseointerfaced implant system
in accordance with the present invention may be permanently affixed to the jaw bone.


The artificial tooth of the present invention is

ED161083                        - 4 -

implantable in the jaw bone (alveolar) and employs an
implantable tooth root. The tooth root has a distal
end portion extending into the jaw bone and a proximal
end portion being accessible from the outer surface of
the jaw bone. The root further includes a hollow
extending from the proximal end portion of the root
toward the distal end portion of the root. The root
may include means for tapping, or self tapping the
same in relation to the jaw bone during placement.
Means, such as a threaded surface, is also provided
for fixing the root to the jaw bone. The hollow of the
tooth root provides a place of fixation for the remainder
of the artificial tooth. A post threads or otherwise
fixes to the hollow of the tooth root and extends upwardly away from the jaw bone. The hollow may be sealed
during a healing period to further strengthen the tooth
root, and to maintain an unobstructed place of fixation
for the post. The post has a first portion fitting
within the hollow of the root and a second portion
extending outwardly from the hollow. The post second
portion also has an outer surface which slopes downwardly toward the first portion of the post, and preferably, inwardly toward the centre of the post. The
so called obtuse angle thus provided provides a tight
contact between the gingiva and the implant and also
protects this contact.

A crown is connected to the post, specifically the second portion of the post extending outwardly from the hollow of the tooth root. The second portion of the post is also formed such that a base connects to the first portion of the post and a stem extends from the base of the second portion of the post. Means are also provided for breakably connecting the base to the stem of the second portion of the post. In this manner, excessive lateral forces would shear the post rather than traumatizing the implant or the jaw bone itself.

To limit the elasticity of the upper structure, the second portion of the post may be coated with a polymer or plastics substance which would lie between the crown and the post. The polymer or plastics acts as a shock absorber and protects the bone against sudden high stress. Moreover, the polymer or plastics coating must have an elasticity which would limit mobility of the implant system thus precluding damage to the bone around the natural teeth.

The base of the second portion of the post may include a dimension that extends a greater distance transversely in relation to the root than a transverse dimension of the stem of the second portion of the post. Thus a platform is provided for the plastics or polymer coating against shear stresses thereupon.

Another embodiment of the present invention utilizes a spacer and spline as the post. Means for fixing the spacer adjacent to the spline and between the root and the crown is also provided. The spacer may include the sloping outer surface of the post. Such a spacer would provide the dental practitioner with a method for adjusting the height of the same above the artificial tooth root. The spacer would also have means of turning the same in relation to the spline. Thus, the spacer and post fittingly engage one another.

The implant of the present invention may also include means for permitting the attachment of a denture to the post and the plastics, metal or like coating there around.

The present invention provides an artificial tooth implantable in a jaw bone which provides satisfactory service over a long term. Moreover, it also provides an artificial tooth which closely resembles the mobility of the natural tooth, thus permitting the patient to chew in a normal manner and protect against parafunctional forces.

An artificial tooth in accordance with the invention may be used in substitution for a single tooth or a group of teeth as well as being connectable to natural teeth.

An artificial tooth implantable in a jaw bone in accordance with the invention protects against food particles being wedged between the gingiva and the implant during the chewing process, and against traumatizing of the contact site between the gingiva and implant. Moreover, the artificial tooth of the invention has a predetermined breakage point of a portion thereof, upon the application of a predetermined shear force, thus protecting the implant and/or the jaw bone itself.

In accordance with a development of the invention the artificial tooth utilizes a post having a removable section which permits the dental practitioner to adjust the height of the post in relation to the tooth root.

The dental practitioner is, of course, permitted to remove all portions of the implant of the invention and replace the same with new portions, except the artificial root.

Other particular characteristics and features of the invention will become apparent as the specification continues.

The invention will be described further, by way of example, with reference to the accompanying drawings, in which:

Fig. 1 is a sectional view of a first embodiment of the artificial tooth of the present invention showing a portion of the jaw and gum in broken away configuration;

Fig. 1a is a view taken along line 1A-1A of Fig. 1;

Fig. 1b is a view taken along line 1B-1B of Fig. 1;

Fig. 1c is a view taken along line 1C-1C of Fig. 1;

Fig. 2 is a sectional view of a second embodiment of the present invention; and

Fig. 3 is a sectional view of a third embodiment of the present invention.

Various aspects of the present invention will evolve from the following detailed description which should be taken in conjunction with the hereinabove described drawings. The invention as a whole is shown in the figures by reference character 10 and includes as one of its elements an implantable tooth root 12.

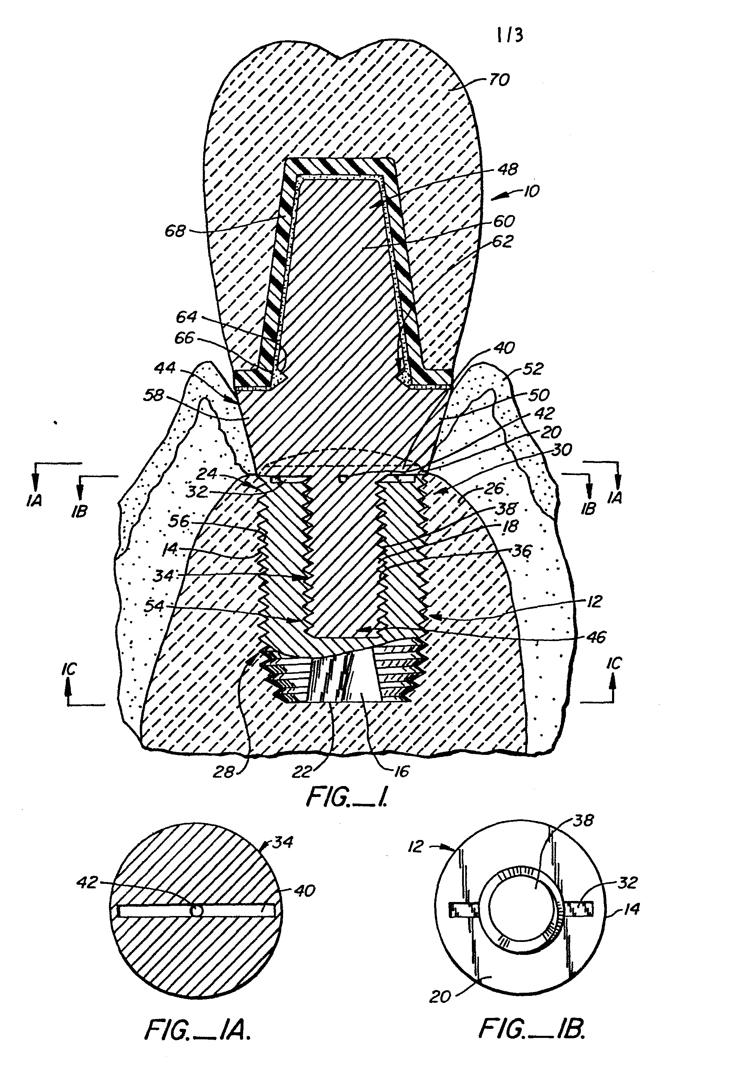

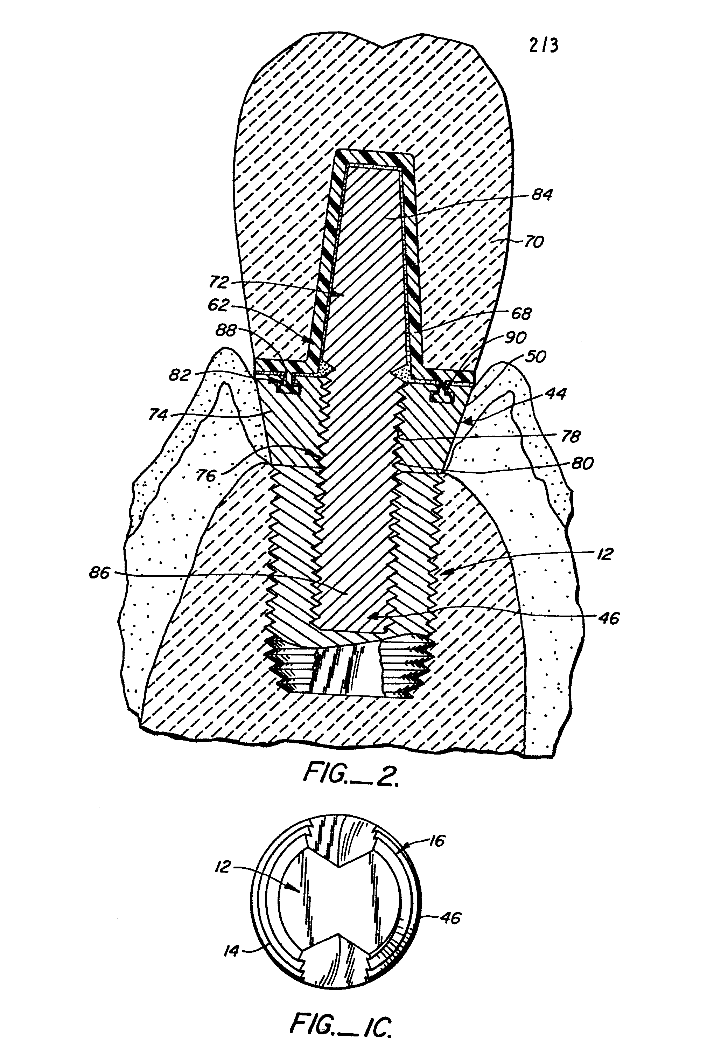

The root 12 may be constructed of a relatively rigid biocompatable material. For example, titanium would be a satisfactory material under this criteria. The root 12 is roughly cylindrical in shape and possesses a threaded surface 14. The root 12 may also include a self tapping construction 16,( Fig. 1 broken away portion ) of known construction. The root 12 includes a hollow portion 18 which extends from the upper surface 20 of root 12 toward the lower surface 22 thereof. Thus, a proximal end portion 24 of root 12 extends to the outer surface of the jaw bone 26 and a distal end portion 28 of root 12 extends into the jaw bone 26 as far as is necessary for a satisfactory implantation. (A plan view of the root 12 itself is shown in Fig. 1B). The threaded outer surface 14 of the root 12 threadingly engages the threaded surface of the jaw bone (Fig. 1C) 26 created by the self tapping means 16. Thus, this threading engagement may be considered means 30 for fixing the root 12 to the jaw bone 26. A slot 32 permits the dentist to use a driving means to turn the root 12 during the tapping of the jaw bone 26. It should be noted that a screw 34 (shown in broken lines in Fig. 1 and in plan view in Fig. 1A may be temporarily placed in the hollow portion 18 and is held in place by the threaded surface 36 of the screw 34 engaging a threaded surface 38 of the root 12 within the hollow portion 18. The screw 34 is temporarily inserted into hollow 18 during first stage of the implant as will be further described hereinafter.

A Post 44 includes a first portion 46 which fits within the hollow 18 of the root 12 and a second portion 48 which extends outwardly from the hollow 18 and upwardly from the surface of the jaw bone 26. The second portion 48 includes an outer surface 50 which slopes downwardly toward the first portion 46 of the post 44 and inwardly toward the centre of the post 44. This permits the tight fitting of the gingiva 52 to the outer surface 50. The sloping surface 50 also acts as a shelter against food particles wedging between said surface 50 and the gingiva 52. It should be added that the prevention of food particles from entering the space between the gingiva and the outer surface 50 of the post prevents damage to the implant and the living tissue thereat. Means 54 fixed the first portion 46 of the post 44 within the hollow 18 of the root 12. Such means may take the form of providing the first portion 46 of the post 44 with a threaded surface 56 which engages the threaded surface 38 of the hollow 18. It will be apparent that the threaded surface 36 of the screw 34 previously engaged the same threaded surface 38 of the hollow 18. The Post 44 may again be constructed of a fairly rigid material such as titanium. The second portion 48 of the post 44 includes a base 58 connected to the first portion 46 of the post 44. A stem 60 extends from the base 58 upwardly from the jaw bone 26. As shown in the embodiment in Fig. 1, the stem 60 is narrower transversely than the base 58. Means 62 breakably connects the base 58 to the stem 60. In other words, the second portion 48 of post 44 includes a weakened undercut portion 64 which surrounds the connection area between the base 58 and the stem 60. Thus, any excess lateral or shear forces will cause the breakage of the stem 60 in relation to the base 58 and thereby protect the root 12 in the bone 26. The undercut portion 64
is filled with a glue 66 which also surrounds the
stem 60. The glue 66 is used to attach a layer of
resilient material 68 such as silicone, polysulphone,
or the like. The thickness and quality of the resilient layer 68 may be predetermined to restrict the
range of movement of the upper structure to about
200 microns. The resilient layer 68 also acts as a
shock absorber to protect the bone 26 against sudden
high stress. Finally, a crown 70 is formed and
positioned as shown in Fig. 1.

Turning to Fig. 2, it may be seen that another
embodiment of the present invention is provided.
The post 44 includes a first portion 46 which fixes
to the root 12 in the same manner as the post shown
in Fig. 1. However, the upper portion 48 of the
post 44 has been split into a spline 72 and a
washer or spacer 74. Means 76 fixes the spacer 74
to the spline 72. As shown in Fig. 2, the means 76
takes the form of a threaded outer surface 78 of
the spline 72 engaging a threaded surface 80 of
the spacer 74. Means 82 is provided for turning the
spacer 74 in relation to the spline 72. An upper
portion 84 of the spline 72 may again break in relation to the lower portion 86 thereof via means 62. In certain cases, the spacer 74 may be replaced with one having a different height to compensate for dimensional adjustments to the root 12. Means 82, in the form of openings 88 and 90, permit the use of a tool to perform this turning or rotational action.

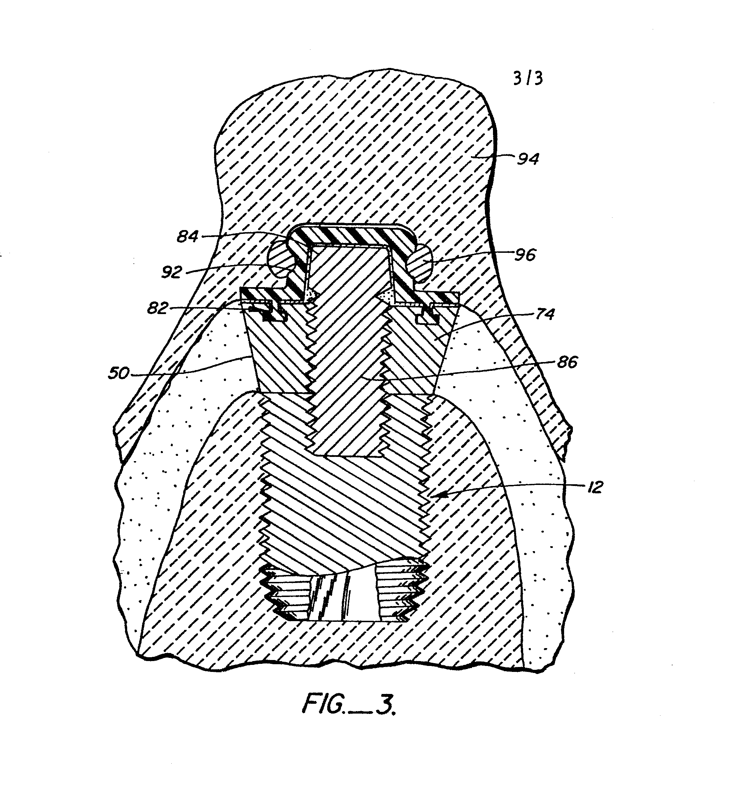

Turning to Fig. 3, it may be seen that the upper portion 84 of the spline 72 may be reduced in size and a new resilient layer having a groove 92 may be placed over upper portion 84. A denture 94 may be snapped into place by the use of "O" ring 96. It should be noted that if any portion of the spline 72 or the post 44 break by the use of means 62, the remainder of the post 44 or the spline 72 within the root 12 may be removed and replaced.

In operation the jaw bone 26 is made visible to the dental practitioner by the use of a surgical device. The root 12 is tapped into place using the tapping means 16 such that the upper surface 20 of root 12 (see Fig. 1B) is accessible at the outer surface of the bone 26. The drills used to locate the root opening are cooled to protect the bone against

0139052

ED171083                    - 14 -

burning during this process. The screw 34 is inserted into the hollow 18 of the root 12 and covered by gingiva 52 for approximately four months. After this time period a pilot hole 42 permits the dental practitioner to locate the screw 34 through the gingiva 52 covering the screw 34. A special cutting instrument removes the overlying tissue to reveal the screw 34. The screw 34 is then removed and the post 44 or the spline 72 and the spacer 74 are inserted within the hollow 18 of the root 12. It should be apparent that the superstructure consisting of the crown and the resilient layer 68 could be attached to the post 44 or the spline 72 and the spacer 74 after fixation of the post 44 or the spline and the spacer 72, 74 to the root 12. The resilient layer 68 will separate under pressure, such as the pressure applied by a plier-like device. Separation of the resilient layer 68 from the post 44 permits the dental practitioner to inspect, and/or alter the superstructure of the implant system. The post 44 would also be removable from the root 12. As heretofore described, the spacer 74 may be replaced with a spacer of a different height. The upper portion 84 of the spline 72 may be cut down to provide for the insertion of a denture. Thus, all portions of the artificial tooth are replaceable, except the root 12.

While only the foregoing embodiments of the present invention have been set forth in considerable detail for the purposes of making a complete disclosure of the invention, it may be apparent to those of skill in the art that numerous changes may be made in such detail without departing from the principles of the invention.

0139052

ED171083                    - 16 -

## CLAIMS

1.    An artificial tooth (10) implantable in a jaw
bone (26) comprising:

a.    an implantable tooth root (12), said root having
a distal end portion (28) intended for extending into
the jaw bone and a proximal end portion (24) being
accessible from the outer surface of the jaw bone;
said root further including a hollow (18) extending
from said proximal end portion of said root toward
said distal end portion of said root;

b.    means (30) for fixing said root to the jaw bone;

c.    a post (44) said post having a first portion (46)
fitting within said hollow of said root and a  second
portion (48) extending outwardly from said hollow;
said second portion having an outer surface (50) which
slopes downwardly toward said first portion of said
post, said second portion of said post further includ-
ing a base (58) connected to said first portion of
said post;  a stem (60) extending from said base;  and
a weakened portion (62) at said connection between said
base and stem for breakably connecting said base to
said stem;

d.   means (54) for fixing said first portion of said
post within said hollow of said root; and

e.   a crown (70) connected to said post.

2.   An artificial tooth as claimed in claim 1 in
which said weakened portion at said connection
between said base and said stem includes an undercut
portion (64) thereat.

3.   An artificial tooth as claimed in claim 1 or 2
which further comprises a layer of resilient material
(68) laminated between said crown and said post.

4.   An artificial tooth as claimed in claim 1, 2 or
3 in which said base (58) of said second portion of
said post includes a dimension that extends a greater
distance transversely in relation to said root (12)
than a transverse dimension of said stem (60) of said
second portion of said post,  said second portion outer
surface sloping downwardly toward said first portion
being defined to also slope inwardly toward the centre
of said post (44).

5.   An artificial tooth as claimed in claim 1, 2 or
3 in which said post (44) additionally comprises a spacer (74) and means (76) for fixing said spacer adjacent said post between said root and said crown, said spacer providing said sloping outer surface (50).

6. An artificial tooth as claimed in claim 5 in which said spacer includes means (82) for turning same in relation to said post.

7. An artificial tooth as claimed in any preceding claim in which said root includes means (16) for tapping said root in relation to the jaw bone during placement of said root in the jaw bone.

8. An artificial tooth as claimed in any of claims 3 to 7 in which said second portion (48,84) of said post, and said layer of resilient material (68) further include means (92, 96) for holding a denture thereto.

FIG.__I.

FIG.__IA.

FIG.__IB.

FIG._2.

FIG._IC.

FIG._3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-B-2 413 883 (KOCH) <br> * Column 3, line 12 - column 4, line 41; figure * | 1 | A 61 C 8/00 |
| A | | 3,4,8 | |
| | --- | | |
| Y | DE-A-3 110 693 (BADEMIS) <br> * Page 11, line 17 - page 12, line 6; figure 1 * | 1 | |
| A | | 5,6 | |
| | --- | | |
| Y | DE-A-1 961 531 (AGA AB) <br> * Page 11, line 26 - page 12, line 10; figures 4, 6 * | 1 | |
| | | | TECHNICAL FIELDS SEARCHED (Int. Cl. ³) |
| A | | 2 | A 61 C 5/00 <br> A 61 C 8/00 <br> A 61 C 13/00 |
| | --- | | |
| D,A | US-A-4 178 686 (RIESS et al.) <br> * Column 5, lines 35-45; figure 1 * | 3 | |
| | --- | | |
| A | DE-A-2 615 116 (KYOTO CERAMIC KK) <br> * Page 6, lines 9-20; figure 2 * | 5 | |
| | --- | | |
| D,A | US-A-3 579 831 (STEVENS et al.) <br> * Column 2, lines 49-50 * | 7 | |
| | ---     -/- | | |

The present search report has been drawn up for all claims

| Place of search <br> BERLIN | Date of completion of the search <br> 30-05-1984 | Examiner <br> SIMON J J P |
|---|---|---|

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl. ³) |
| E | US-A-4 416 629 (MOZSARY et al.) * Whole document * | 1-8 | |
| | --- | | |
| D,A | US-A-4 324 550 (REUTHER et al.) | | |
| | --- | | |
| D,A | US-A-4 318 696 (KASAMA et al.) | | |
| | --- | | |
| D,A | US-A-4 259 072 (HIRABAYASHI et al.) | | |
| | ----- | | |
| | | | TECHNICAL FIELDS SEARCHED (Int. Cl. ³) |

The present search report has been drawn up for all claims

| Place of search BERLIN | Date of completion of the search 30-05-1984 | Examiner SIMON J J P |
|---|---|---|